# EUROPÄISCHE PATENTSCHRIFT

(11) **EP 0 508 170 B1**
(45) Veröffentlichungstag und Bekanntmachung des Hinweises auf die Patenterteilung: **22.05.1996**
(21) Anmeldenummer: 92104666.0
(22) Anmeldetag: 18.03.1992
(51) Int. Cl.: A01C 15/00

(54) **Schleuderdüngerstreuer**
Centrifugal fertilizer spreader
Epandeur centrifugé

(30) Priorität: 06.04.1991 DE 4111168
(43) Veröffentlichungstag der Anmeldung: 14.10.1992
(73) Patentinhaber: Amazonen-Werke H. Dreyer GmbH & Co. KG, D-49205 Hasbergen (DE)
(72) Erfinder: Dreyer, Heinz, Dipl.-Ing. Dr., W-4507 Hasbergen (DE)

(56) Entgegenhaltungen:
- DE-A- 1 784 362
- GB-A- 1 164 040

## Beschreibung

Die Erfindung betrifft einen Schleuderstreuer gemäß des Oberbegriffes des Patentanspruches 1. Ein derartiges Gerät ist Z.B. bereits aus der GB-A-1 164 040 bekannt.

Ein weiterer Schleuderstreuer ist durch die DE-PS 37 36 827 bekannt. Bei diesem Schleuderstreuer ist die Abdichtplatte quer zur Fahrtrichtung in einer Schiebeführung beweglich angeordnet. Diese bekannte Anordnung bietet den Vorteil, daß nach dem Entfernen der Antriebswelle aus der Abdichtplatte, die Abdichtplatte seitlich aus der Schiebeführung herausgezogen werden kann. Somit ist eine äußerst einfache Erneuerung der Abdichtplatte möglich. Es hat sich nun im praktischen Einsatz gezeigt, daß der untere Bereich des Vorratsbehälters sich beim Beladen und während des praktischen Einsatzes sich gegenüber dem Tragrahmen in Fahrtrichtung bewegt. Hierdurch kommt es zu einer Relativbewegung zwischen der in dem Vorratsbehälter ragenden Antriebswelle einerseits und der Bodenplatte und der Abdichtplatte des Vorratsbehälters andererseits. Da der Ringspalt zwischen der Antriebswelle und der Bohrung in der Abdichtplatte sehr klein sein muß, kommt die Abdichtplatte an der Antriebswelle zur Anlage. Dieses führt sowohl zu einem Verschleiß der Abdichtplatte und der Antriebswelle wie auch zu einer relativ großen Hitzeentwicklung aufgrund der Reibung zwischen der Antriebswelle und der Abdichtplatte.

Der Erfindung liegt die Aufgabe zugrunde, auf einfache Weise eine sichere und langfristige Abdichtung zwischen der Antriebswelle und der Bodenplatte des Vorratsbehälters zu erreichen.

Diese Aufgabe wird erfindungsgemäß durch die kennzeichnenden Maßnahmen des Anspruches 1 gelöst.

Infolge dieser Maßnahme, wobei gleichzeitig sichergestellt sein muß, daß die sich in der Bodenplatte befindliche Bohrung ausreichend bemessen ist, so daß bei einer Ralativbewegung der Bodenplatte gegenüber der Antriebswelle die Bodenplatte nicht mit der Antriebswelle in Berührung kommt. Da die Abdichtplatte in und entgegen der Fahrtrichtung zumindest bewegbar gegenüber dem Vorratsbehälter angeordnet ist, kann die Abdichtplatte sich mit der Antriebswelle bei einer Relativbewegung des Vorratsbehälters gegenüber der Antriebswelle bewegen. Die Abdichtplatte ist also schwimmend gegenüber der Bodenplatte im Vorratsbehälter angeordnet. Sie justiert sich quasi selbst während des Betriebes immer wieder neu ein.

Ein einfache Anordnung der Abdichtplatte ergibt sich dadurch, daß sie auf der Oberseite der Bodenplatte des Vorratsbehälters angeordnet ist. Hierbei ist die Bodenplatte Bestandteil des Vorratsbehälters.

Um ein sichere Anordnung der Abdichtplatte zu gewährleisten, ist erfindungsgemäß vorgesehen, daß in der Bodenplatte zwei Löcher angeordnet sind, durch welche die in der Abdichtplatte angeordneten Sicherungsbolzen ragen, und daß diese Löcher einen wesentlich größeren Durchmesser als die Sicherungsbolzen aufweisen. Hierdurch wird eine ausreichende Bewegungsmöglichkeit der Abdichtplatte bei einer Relativbewegung des unteren Teiles des Vorratsbehälters gegenüber der Antriebswelle gewährleistet.

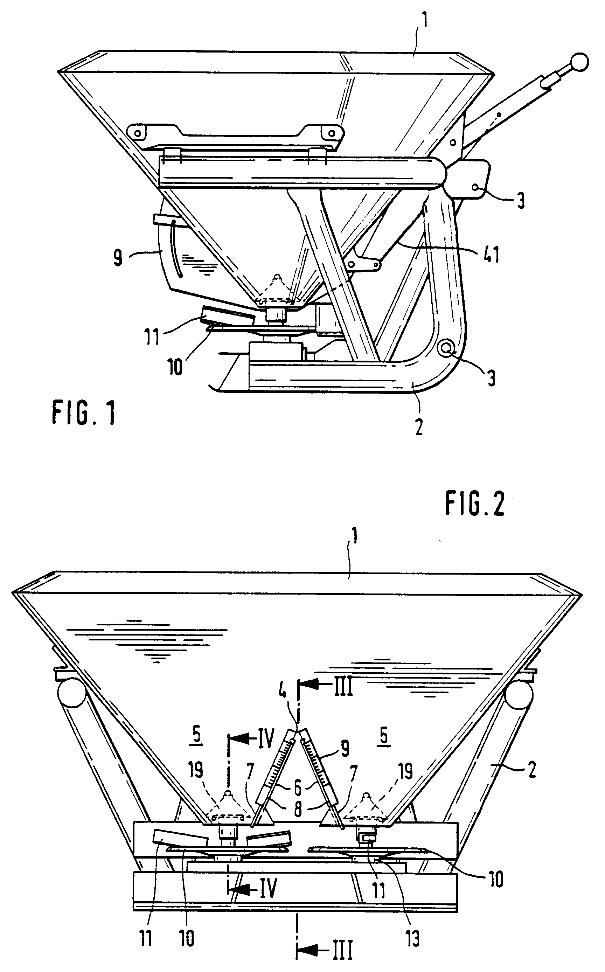

Weitere Einzelheiten der Erfindung sind den übrigen Unteransprüchen, der Beispielsbeschreibung und den Zeichnungen zu entnehmen. Hierbei zeigen
- Fig. 1: einen erfindungsgemäßen Schleuderdüngerstreuer in der Seitenansicht,
- Fig. 2: den Schleuderdüngerstreuer in der Rückansicht,

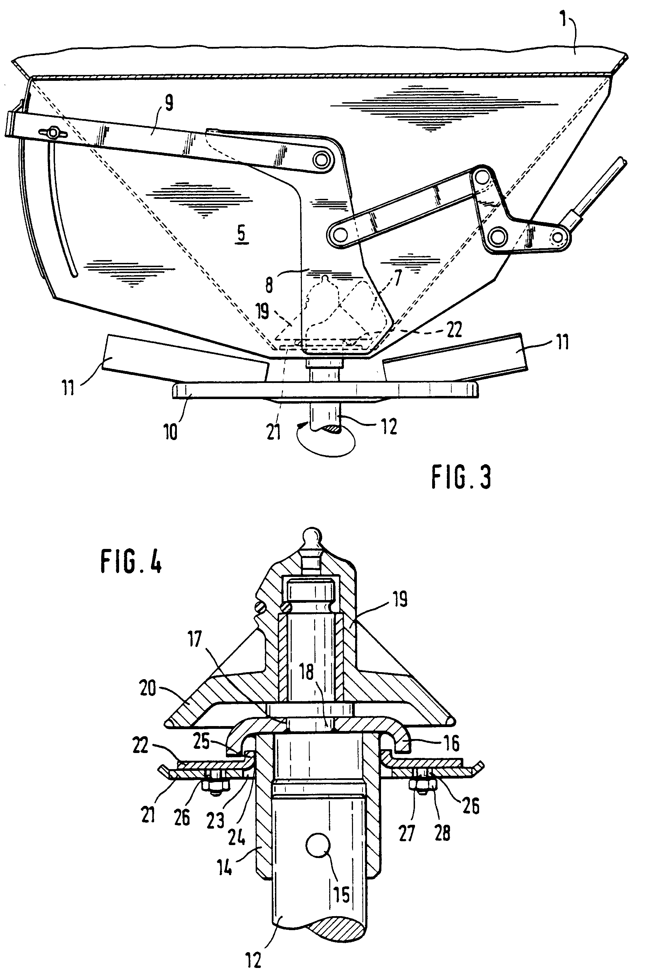

- Fig. 3: den unteren Bereich des Vorratsbehälters in der Ansicht III - III und
- Fig. 4: die Anordnung der Dichtplatte in der Ansicht IV - IV.

Der Schleuderdüngerstreuer weist den Vorratsbehälter 1 und den Rahmen 2 auf. Am Rahmen 2 sind auf der Vorderseite die Dreipunktkupplungselemente 3 angeordnet, über welche der Schleuderdüngerstreuer an den Dreipunktkraftheber eines nicht dargestellten Schleppers anzubauen ist. Der Vorratsbehälter 1 ist in seinem unteren Bereich durch das dachförmige Mittelteil 4 in die beiden Auslauftrichter 5 aufgeteilt. Im unteren Bereich der Seitenwände 6 des dachförmigen Mittelteiles 4 sind jeweils die Auslauföffnungen 7 angeordnet. Vor den Auslauföffnungen 7 ist jeweils ein Schieber 8 angeordnet, mittels welchem die Öffnungsweite der jeweiligen Auslauföffnung 7 einzustellen ist. Die Größe der Auslauföffnungen, d.h. die Öffnungsstellung der Schieber wird über die Anschläge 9, die sich in Verlängerung des dachförmigen Mittelteiles befinden, eingestellt.

Unterhalb der Auflauföffnungen 5 sind die Schleuderscheiben 10 mit ihren Wurfelementen 11 auf den Getriebeausgangswellen 12 des Getriebes 13, welches am Rahmen 2 befestigt ist, angeordnet. Über das Getriebe 13 werden die Schleuderscheiben 10 im entgegengesetzten Drehsinn zueinander rotierend angetrieben, und zwar in der Weise, daß sie im vorderen mittleren Bereich aufeinander zu laufen. Auf dem oberen Ende der Getriebeausgangswellen 12 ist oberhalb der Schleuderscheiben 10 die Rohrhülse 14 drehfest angeordnet. Die Rohrhülse 14 ist über den Bolzen 15 drehfest mit der Getriebeausgangswelle 12 verbunden. Mit der Rohrhülse 12 ist der einen nach unten umgebogenen Rand aufweisende Plattenring 16 befestigt. Dieser Plattenring 16 weist die Bohrung 17 auf, in welche die Rührwerkswelle 18 befestigt ist. Die Rührwerkswelle 18 ist somit eine Verlängerung der Getriebeausgangswelle 12. Die Rührwerkswelle 18 ragt von unten senkrecht in den unteren trichterförmigen Auslauftrichter 5 jeweils hinein. Die Rührwerkswelle 18 wird somit über die Getriebeausgangswelle 12 rotierend angetrieben. Die Rührwerkswelle 18 trägt den Rührkörper 19 mit den Rührelementen 20.

Jeder Auslauftrichter 5 wird von unten durch die Bodenplatte 21 und die Abdichtplatte 22 verschlossen. Die Bodenplatte 21 weist die Bohrung 23 auf. Diese Bohrung 23 weist einen wesentlich größeren Durchmesser als die Rohrhülse 14 auf. Oberhalb der Bodenplatte 21, die Bestandteil des Vorratsbehälters 1 ist, ist die Abdichtplatte 22 angeordnet. Die Abdichtplatte 22 weist die Bohrung 24 mit dem umgebördelten Rand 25 auf. Der Durchmesser dieser Bohrung 24 ist etwas größer als der Durchmesser der Rohrhülse 14.

In der Bodenplatte 21 sind die beiden Löcher 26 angeordnet, durch welche die an der Abdichtplatte 22 angeordneten Sicherungsbolzen 27 befestigt sind. Diese Sicherungsbolzen 27 ragen durch die beiden Löcher 26. Die Löcher 26 weisen einen wesentlichen größeren Durchmesser als die Schraubbolzen ausgebildeten Sicherungsbolzen 27 auf.

Auf der Unterseite der Bodenplatte 21 sind auf den Sicherungsbolzen 27, die als Schraubbolzen ausgebildet sind, die selbstsichernden Muttern 28 angeordnet.

Die Bohrungen 26, die einen wesentlich größeren Durchmesser als die Sicherungsbolzen 27 aufweisen, ermöglichen, daß die Abdichtplatte 27 in der Ebene der Bodenplatte 21 in begrenztem Umfange frei verschiebbar angeordnet ist. Aufgrund dieser Anordnung der Abdichtplatte 22 im Vorratsbehälter 1 ist die Abdichtplatte 22 gegenüber dem Vorratsbehälter 1 zumindest in und entgegen der Fahrtrichtung verschiebbar.

Wenn der Vorratsbehälter 1 beladen ist und beim praktischen Streubetrieb, bewegt der untere Bereich des Vorratsbehälters gegenüber dem Rahmen 2 mit der Getriebewelle 12 und der Rohrhülse 14 sich relativ in und entgegen der Fahrtrichtung. Die Bohrung 23 in der Bodenplatte 21 ist so groß bemessen, daß bei größter vorkommender Relativbewegung die Bodenplatte 21 nicht an die Rohrhülse 14 anstößt. Bei dieser Relativbewegung des unteren Bereiches des Vorratsbehälters 1 gegenüber der Getriebeausgangswelle 12 bzw. der Rohrhülse 14 kann sich der Vorratsbehälter 1 gegenüber der Abdichtplatte 22 relativ bewegen, so daß die Abdichtplatte 22 sich mit der Getriebewelle 12 gegenüber dem Vorratsbehälter 1 in bzw. entgegen der Fahrtrichtung bewegt. Hierdurch wird ein unzulässiger Druck der Dichtplattenkante auf die Rohrhülse 14 bzw. die Antriebswelle 12 vermieden. Die Abdichtplatte 22 ist also gegenüber dem Vorratsbehälter 1 bzw. der Bodenplatte des Vorratsbehälters 1 schwimmend angeordnet. Hierbei ist von entscheidender Bedeutung, daß die selbstsichernden Muttern 28 auf den Schraubbolzen 27 nicht fest angezogen werden, so daß die freie Verschiebbarkeit der Abdichtplatte 22 gegenüber der Bodenplatte 21 des Vorratsbehälters 1 erhalten bleibt. Die selbstsichernden Muttern 28 in Verbindung mit den Schraubbolzen 27 haben lediglich die Aufgabe, die Abdichtplatte 24 an der Bodenplatte 21 zu sichern, wenn der Vorratsbehälter 1 leer ist. Deshalb ist es wichtig, daß nach dem Einjustieren der Abdichtplatte 22 und der Bodenplatte 21 gegenüber der Antriebswelle 12 und der Rohrhülse 14 bei der Montage die selbstsichernden Muttern 28 anschließend wieder etwas auf den Schraubbolzen 27 gelöst werden.

## Patentansprüche

1. Schleuderstreuer, mit einem Vorratsbehälter (1) und zumindest auf einer Antriebswelle, die von unten in den Vorratsbehälter hineinragt und Rührorgan trägt, angeordneten Schleuderscheiben (10) mit Wurfelementen (11), denen aus zumindest einer Auslauföffnung (7) in einstellbaren Mengen der auszubringende Dünger zuführbar ist, wobei die Antriebswelle durch die Bodenplatte (21) in den Vorratsbehälter hineinragt und der Bodenplatte eine Abdichtplatte (22) zugeordnet ist, durch welche ebenfalls die das Rührorgan tragende Antriebswelle ragt, wobei die Abdichtplatte beweglich bzgl. des Vorratsbehälters angeordnet ist, und daß die Abdichtplatte (22) gegenüber dem Vorratsbehälter (1) in zumindest in und entgegen der Fahrtrichtung bewegbar angeordnet ist, dadurch gekennzeichnet, daß die Abdichtplatte (22) auf der Oberseite der Bodenplatte (21) des Vorratsbehälters (1) zwischen dem Rührorgan und der Bodenplatte (21) derart angeordnet ist, daß ein Kontakt zwischen Rührorgan (19) und Bodenplatte (21) vermieden wird und die Abdichtplatte (22) mittels Sicherungsbolzen (27) an der Bodenplatte (21) begrenzt verschiebbar festgelegt ist.

2. Schleuderdüngerstreuer nach Anspruch 1, dadurch gekennzeichnet, daß in der Bodenplatte (21) zwei Löcher (26) angeordnet sind, durch welche die an der Abdichtplatte (22) angeordneten Sicherungsbolzen (27) ragen, und daß die Löcher (26) einen wesentlich größeren Durchmesser als die Sicherungsbolzen (27) aufweisen.

3. Schleuderdüngerstreuer nach einem oder mehreren der vorstehenden Ansprüche, dadurch gekennzeichnet, daß die Sicherungsbolzen (27) als Schraubbolzen mit darauf angeordneten selbstsichernden Muttern (28) ausgebildet sind.

4. Schleuderdüngerstreuer nach einem oder mehreren der vorstehenden Ansprüche, dadurch gekennzeichnet, daß die Abdichtplatte (22) in der Ebene der Bodenplatte (21) in begrenztem Umfang frei verschiebbar angeordnet ist.

## Claims

1. Centrifugal broadcaster, having a hopper (1) and centrifugal discs (10), which are disposed on at least one drive shaft protruding into the hopper from below and carrying an agitator member, said discs having throwing elements (11), to which the fertilizer to be distributed is suppliable from at least one outlet aperture (7) in adjustable quantities, the drive shaft protruding through the base plate (21) into the hopper, and a sealing plate (22) being associated with the base plate, the drive shaft carrying the agitator member likewise protuding through said sealing plate, the sealing plate being disposed so as to be displaceable with respect to the hopper, and the sealing plate (22) being disposed so as to be displaceable relative to the hopper (1) at least in the direction of travel and in opposition to the direction of travel, characterised in that the sealing plate (22) is disposed on the upper surface of the base plate (21) of the hopper (1) between the agitator member and the base plate (21) in such a manner that contact between agitator member (19) and base plate (21) is avoided, and the sealing plate (22) is secured on the base plate (21) by means of securing bolts (27) so as to be displaceable to a limited extent.

2. Centrifugal fertilizer broadcaster according to claim 1, characterised in that two holes (26) are provided in the base plate (21), the securing bolts (27) disposed on the sealing plate (22) protruding through said holes, and in that the holes (26) have a substantially greater diameter than the securing bolts (27).

3. Centrifugal fertilizer broadcaster according to one or more of the preceding claims, characterised in that the securing bolts (27) are configured as screw bolts having self-locking nuts (28) disposed thereon.

4. Centrifugal fertilizer broadcaster according to one or more of the preceding claims, characterised in that the sealing plate (22) is disposed so as to be freely displaceable in the plane of the base plate (21) to a limited extent.

## Revendications

1. Epandeur centrifuge comportant un réservoir (1) et au moins un disque d'épandage centrifuge (10) porté par un axe d'entraînement pénétrant par en dessous dans le réservoir et muni d'un organe agitateur, le disque comportant des éléments d'éjection (11) recevant, par au moins un orifice de sortie (7), des quantités réglables d'engrais à distribuer, l'axe d'entraînement traversant la plaque de fond (21) pour pénétrer dans le réservoir, et cette plaque de fond est munie d'une plaque d'étanchéité (22) également traversée par l'axe d'entraînement portant l'organe agitateur, la plaque d'étanchéité étant montée mobile par rapport au réservoir pour éviter tout contact entre l'organe agitateur (19) et la plaque de fond (21), et la plaque d'étanchéité (22) étant montée mobile par rapport au réservoir (1) au moins alternativement dans la direction de déplacement de l'épandeur, caractérisé en ce que la plaque d'étanchéité (22) est prévue sur la face supérieure de la plaque de fond (21) du réservoir (1), entre l'organe agitateur et la plaque de fond (21), de façon à éviter tout contact entre l'organe agitateur (19) et la plaque de fond (21), et la plaque d'étanchéité (22) est fixée de manière à pouvoir coulisser de façon limitée sur la plaque de fond (21), par des vis de fixation (27).

2. Epandeur centrifuge d'engrais selon la revendication 1, caractérisé en ce que la plaque de fond (21) comporte deux orifices (26) traversés par les vis de fixation (27) portées par la plaque d'étanchéité (22), et les orifices (26) ont un diamètre beaucoup plus grand que celui des vis de fixation (27).

3. Epandeur centrifuge d'engrais selon l'une ou plusieurs des revendications précédentes, caractérisé en ce que les vis de fixation (27) sont réalisées sous la forme de vis recevant des écrous autobloquants (28).

4. Epandeur centrifuge d'engrais selon l'une ou plusieurs des revendications précédentes, caractérisé en ce que la plaque d'étanchéité (22) est coulissante librement de manière limitée dans le plan de la plaque de fond (21).
